Europäisches Patentamt

European Patent Office

Office européen des brevets

(19)

(11) Veröffentlichungsnummer: **0 359 917 B1**

# (12) EUROPÄISCHE PATENTSCHRIFT

(45) Veröffentlichungstag der Patentschrift:
08.01.92 Patentblatt 92/02

(51) Int. Cl.⁵: **F16D 3/60**, F16D 3/10,
F16D 3/12

(21) Anmeldenummer: **89111525.5**

(22) Anmeldetag: **24.06.89**

(54) Drehwinkelverstellbare Ganzstahlkupplung.

(30) Priorität: **06.09.88 DE 3830262**

(43) Veröffentlichungstag der Anmeldung:
**28.03.90 Patentblatt 90/13**

(45) Bekanntmachung des Hinweises auf die
Patenterteilung:
**08.01.92 Patentblatt 92/02**

(84) Benannte Vertragsstaaten:
**AT BE CH DE ES FR GB GR IT LI LU NL SE**

(56) Entgegenhaltungen:
**EP-A- 0 147 290
DE-A- 1 807 838
DE-A- 2 643 224
FR-A- 370 648
FR-A- 2 361 583**

(56) Entgegenhaltungen:
**FR-A- 2 409 417
GB-A- 1 145 845
US-A- 1 636 692
US-A- 4 207 758**

(73) Patentinhaber: **ATEC-Weiss KG
Von-Siemens-Strasse 1
W-4426 Vreden (DE)**

(72) Erfinder: **Weiss, Hermann
Eibergener Strasse 18
W-4426 Vreden (DE)**
Erfinder: **Weiss, Rudolf
Händelstrasse 13
W-4426 Vreden (DE)**

(74) Vertreter: **Cohausz & Florack Patentanwälte
Postfach 14 01 61 Schumannstrasse 97
W-4000 Düsseldorf 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Ganzstahlkupplung mit mindestens einem die Kupplungshälften im unbelasteten Zustand axial auf Abstand haltenden außermittigen Federlamellenpaket z.B. gemäß FR-A-2409417.

Ganzstahlkupplungen dieser Gattung werden bekanntermaßen in vielen Anwendungsfällen eingesetzt. Solche Kupplungen weisen üblicherweise einen in einer Ebene angeordneten Lamellenpaketkranz auf, der in Umfangsrichtung wechselweise an die Flansche der Kupplungshälften angeschlossen ist. Hierdurch wird ermöglicht, daß die Ganzstahlkupplung einen Axialversatz oder auch einen Winkelversatz aufnehmen kann, ohne daß sich ein nennenswerter Drehversatz ergibt. Für besondere Anwendungen, beispielsweise zur Verstellung des Umfangsregisters eines Plattenzylinders bei Rotationsdruckmaschinen, ergeben sich jedoch lastschwankungsbedingte Winkeländerungen, die aufgrund der Drehsteifheit der bekannten Ganzstahlkupplungen nicht ausgeglichen werden können.

Daher liegt der Erfindung die Aufgabe zugrunde, eine Ganzstahlkupplung der eingangs genannten Art so auszugestalten, daß die Kupplungshälften in bezug auf den Drehwinkel zueinander verstellbar sind.

Diese Aufgabe wird bei einer gattungsgemäßen Ganzstahlkupplung dadurch gelöst, daß das Federlamellenpaket um einen spitzen Winkel gegenüber der Achsnormalebene geneigt ist und den Kupplungshälften eine Verstelleinrichtung zugeordnet ist, mittels der die Kupplungshälften in ihrem axialen Abstand voneinander einstellbar sind.

Durch axiale Bewegung der beiden Kupplungshälften relativ zueinander ergeben sich aufgrund der Schrägstellung des Federlamellenpaketes Verdrehungen der beiden Kupplungshälften zueinander, wodurch sich lastschwankungsbedingte Winkeländerungen der anzutreibenden Maschinen kompensieren lassen. In Abhängigkeit von der Schrägstellung des Federlamellenpaketes läßt sich erreichen, daß auch bei kurzen axialen Verstellbewegungen eine vergleichsweise große Winkelverstellung erreicht werden kann.

Die Wirkungsweise der erfindungsgemäßen Ganzstahlkupplung kann dadurch optimiert werden, wenn der Winkel zwischen 30° und 60°, vorzugsweise bei 45°, liegt.

Wenn in Umfangsrichtung mehrere gleichsinnig geneigte Lamellenpakete vorgesehen sind, wird die Wirkungsweise der erfindungsgemäßen Kupplung unabhängig vom Eigengewicht der Kupplungshälften, da sie in bezug zueinander statisch festgelegt sind. Ein besonders einfacher Aufbau wird erreicht, wenn Anfangs- und Endpunkt des Federlamellenpakete mit jeweils einer Kupplungshälfte verbunden sind.

Um bei einem derartigen Aufbau der kupplung ein Aufspreizen der Lamellenpakete bei Druckbelastung zu verhindern, ist eine Aufspreizsicherung vorgesehen, die beispielsweise durch eine das Lamellenpaket umgebende Ummantelung, vorzugsweise eine Blechummantelung, gebildet wird. Der Zwischenraum zwischen Blechummantelung und Lamellenpaket kann mit einem Kunststoff, insbesondere Gummi, ausgefüllt sein, so daß ohne Verlust der biegeelastischen Eigenschaften des Lamellenpaketes ein Aufspreizen einzelner Lamellen vermieden wird.

Eine andere Lösung zur Vermeidung der Lamellenaufspreizung ergibt sich dadurch, daß die Aufspreizsicherung durch eine das Lamellenpaket umgebende, gegen Anfangs- und Endpunkt der Lamellen vorspannbar abgestützte Druckfeder gebildet ist. Im Falle einer Druckbelastung bleibt die Lamelle dann solange gestreckt, bis nicht die eingestellte Druckkraft der Feder überschritten wird.

Eine besonders vorteilhafte Ausführung der erfindungsgemäßen Ganzstahlkupplung ergibt sich, wenn das Federlamellenpaket durch zwei gleichsinnig geneigte Teillamellenpakete gebildet wird, deren jeweils eine Enden an einem gemeinsamen Punkt an der einen Kupplungshälfte angeschlagen sind und deren jeweils andere Enden an unterschiedlichen Punkten an der anderen Kupplungshälfte befestigt sind. Durch die Aufteilung des Federlamellenpaketes in zwei Teillamellenpakete wird jeweils von einem Paket die Druckbelastung und vom anderen Paket die Zugbelastung bzw. umgekehrt aufgenommen. Hierdurch ergibt sich eine besonders robuste Ausführung einer Ganzstahlkupplung.

Zum Erreichen einer axialen Bewegung der Kupplungshälften relativ zueinander kann eine Verstelleinrichtung vorgesehen sein, die von außen betätigbar ist, so daß sich auf diese Weise der gewünschte Verdrehwinkel durch Einstellen des Axialweges vorgeben läßt.

Als weiteres bevorzugtes Ausführungsbeispiel der Erfindung sind den einen Kupplungshälften weitere, im unbelasteten Zustand durch Federlamellenpakete axial auf Abstand gehaltene Kupplungshälften in Reihenschaltung zugeordnet. Durch diese Kombination der erfindungsgemäßen Lösung mit einer weiteren Kupplung läßt sich eine optimal an die geforderten Betriebsbedingungen angepaßte Kupplungseinheit herstellen.

Beispielsweise ist das weitere Kupplungshälftenpaar durch eine an sich bekannte Lamellenkupplung gebildet, die einen geschlossenen Lamellenpaketkranz aufweist, der in Umfangsrichtung wechselweise an die Flansche der jeweiligen weiteren Kupplungshälften angeschlossen ist. Da dieser bekannte Lamellenpaketkranz eine axiale Nachgiebigkeit dieses Teils der Kupplung zuläßt, kann hierdurch der über die Verstelleinrichtung eingebrachte axiale Verschiebungsweg zum Bewirken der Winkelverstellung der einen Kupplungshälften zueinander ausgeglichen werden.

Tritt bei einer solchen aus zwei Teilkupplungen bestehenden Kupplungseinheit ein Winkelversatz zwischen der antreibenden und der anzutreibenden Welle auf, kann dies zur Anregung von Drehschwingungen führen. Zur Vermeidung dieses ungewünschten Verhaltens sind die durch den geschlossenen Lamellenpaketkranz verbundenen Flansche der weiteren Kupplungshälften zusätzlich über ein kuppelstück auf einen festen axialen Abstand zwischen den Flanschen einstellbar.

Zur Dämpfung von Drehmomentspitzen sowie zur Entgegenwirkung von entstehenden Schwingungen ist nach einem anderen Ausführungsbeispiel vorgesehen, daß die durch den geschlossenen Lamellenpaketkranz verbundenen Flansche über ein zusätzliches Federelement mit einstellbarer Vorspannung axial koppelbar sind. Dabei wird die Vorspannung des zusätzlichen Federlementes so eingestellt, daß sich über den axialen Federweg ein dem bestimmten Drehmoment entsprechender Verstellwinkel zwischen den Kupplungshälften ergibt.

Schließlich ist ein weiteres bevorzugtes Ausführungsbeispiel der Erfindung dadurch gekennzeichnet, daß das weitere Kupplungshälftenpaar gegenüber den Teillamellenpaketen des einen Kupplungshälftenpaares in der Achsnormalbene entgegengesetzt geneigt weitere Teillamellenpakete aufweist. Durch die entgegengesetzte Neigung der Lamellenpakete ergibt sich bei gleicher axialer Verschiebung eine Addition der Drehwinkel. Bei gleicher axialer Beaufschlagung der Verstelleinrichtung wird beispielsweise bei zwei identischen jedoch gegensinnig geneigten Lamellenpaketen eine Verdoppelung des Verdrehwinkels gegenüber der einfachen Ausführungsform erreicht.

Für bestimmte Anwendungsfälle, wenn die axiale Verstellung der Kupplungshälften zueinander nicht direkt über die Verstelleinrichtung erfolgen kann, ist die Ausführung der Ganzstahlkupplung so gewählt, daß die Kupplungshälften von einem druckdichten Gehäuse umgeben sind und ein Einlaßventil vorgesehen ist, bei dessen Druckbeaufschlagung die Kupplungshälften axial verstellbar sind. Durch das im Innern des druckdichten Gehäuses befindliche und über die Beaufschlagung des Ventils komprimierbare Medium, beispielsweise Luft, läßt sich die erfindungsgemäße Lösung auch für eine pneumatische Anwendung gestalten.

Die Erfindung wird im folgenden anhand einer sieben Ausführungsbeispiele darstellenden Zeichnung näher erläutert. Dabei zeigen im einzelnen

Fig. 1    ein erstes Ausführungsbeispiel der Erfindung, wobei Fig. 1a den Querschnitt teilweise schematisch, Fig. 1b eine schematische Ansicht entlang der Linie A-A in Fig. 1a, Fig. 1c einen Schnitt entlang der Linie B-B in Fig. 1b unter Druckbelastung des Lamellenpaketes 7a, Fig. 1d eine andere Ausführungsform des Lamellenpaketes entlang der Linie B-B in Fig. 1b, Fig. 1e eine Alternative zur Ausführung von Fig. 1d und Fig. 1f einen Schnitt entlang der Linie C-C in Fig. 1e darstellen,

Fig. 2    ein zweites Ausführungsbeispiel der Erfindung, wobei Fig. 2a eine Teilansicht entlang der Linie D-D in Fig. 2b und Fig. 2b einen Querschnitt zeigt, der zum Teil entlang der Linie A-B und zum Teil entlang der Linie C-D in Fig. 2a gelegt ist,

Fig. 3    ein drittes Ausführungsbeispiel der Erfindung im Schnitt,

Fig. 4    ein viertes Ausführungsbeispiel der Erfindung im Querschnitt entlang der Linien C-D bzw. A-B in Fig. 2b,

Fig. 5    ein fünftes Ausführungsbeispiel der Erfindung im Querschnitt entlang der Linien A-B bzw. C-D in Fig. 2b,

Fig. 6    ein sechstes Ausführungsbeispiel der Erfindung im Querschnitt entlang der Linien A-B bzw. C-D in Fig. 2b und

Fig. 7    ein siebtes Ausführungsbeispiel der Erfindung im Querschnitt.

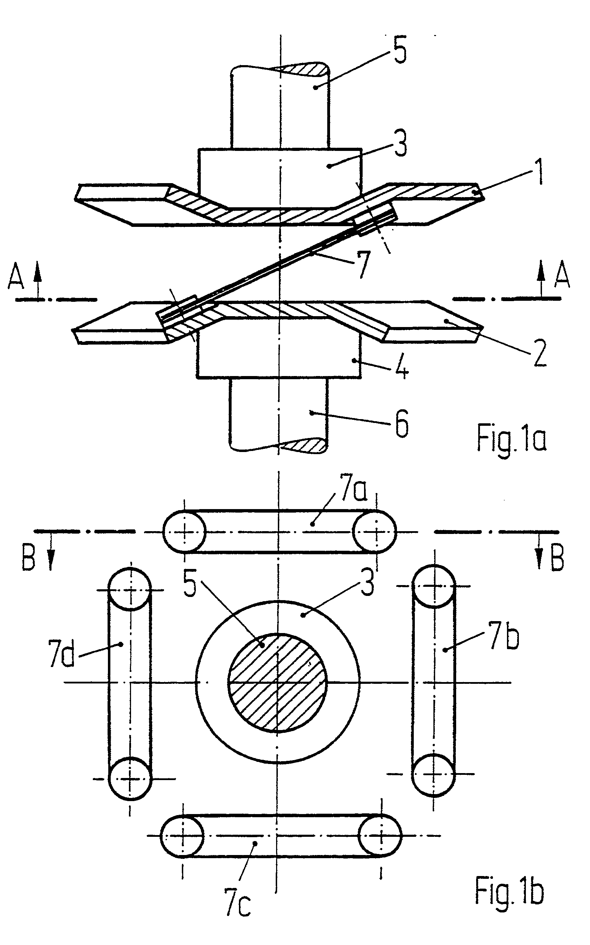

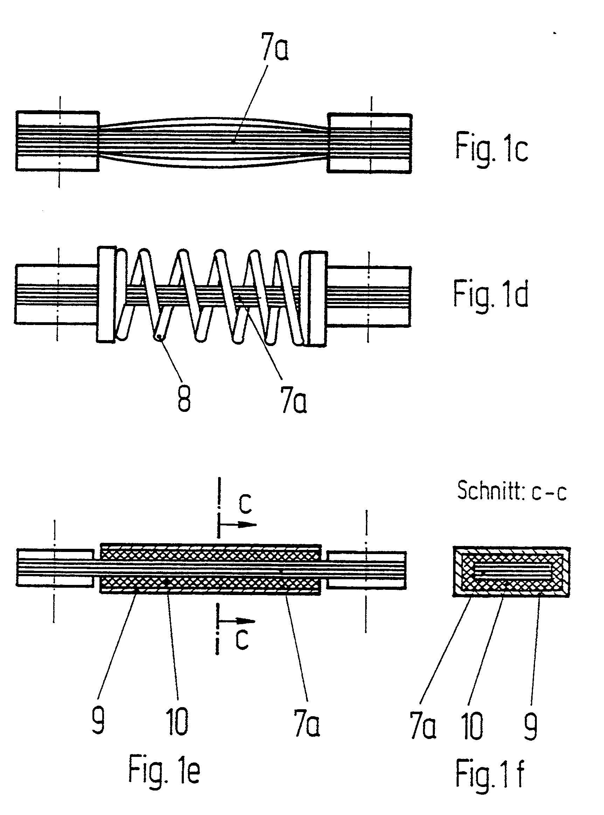

Das in Fig. 1 dargestellte erste Ausführungsbeispiel stellt die konstruktiv einfachste Bauweise für eine drehwinkelverstellbare Kupplung gemäß der Erfindung dar. Hierbei sind die Kupplungshälften 1, 2, die jeweils mit einer Nabe 3, 4 und einer Welle 5, 6 verbunden sind, über ein Lamellenpaket 7 gekoppelt, welches jeweils an einer der beiden Kupplungshälften, beispielsweise mittels einer Schraubverbindung, angeschlagen ist. Das Lamellenpaket ist einerseits außermittig, d.h. außerhalb des Mittelpunktes der Kupplungshälften angebracht und andererseits gegenüber der Achsnormalebene der Kupplung geneigt. Der Neigungswinkel beträgt ca. 45°. Bei einer Abstandsänderung zwischen den Kupplungshälften 1, 2 verdrehen sich diese um einen bestimmten Winkel zueinander.

Aus Symmetriegründen ist es von Vorteil, wenn über den Umfang der Kupplungshälften 1, 2 verteilt beispielsweise vier solcher Lamellenpakete 7a-7d, wie in Fig. 1b gezeigt, verteilt sind. Dadurch wird die Ausführung unabhängig vom Eigengewicht der Kupplungsteile.

Je nach Drehrichtung wirkt bei dieser ersten Ausführung der Erfindung auf die Lamellenpakete 7a-7d entweder ausschließlich eine Zugspannung oder ausschließlich eine Druckspannung. Um im letzteren Fall ein Auf-

3

spreizen der das Lamellenpaket bildenden einzelnen Lamellen zu verhindern, welche z.B. in Fig. 1c schematisch dargestellt ist, wird vorgeschlagen, das Lamellenpaket 7a mit einer spiralförmigen Druckfeder 8 zu umgeben, die an den jeweiligen Anschlußpunkten an der einen oder anderen Kupplungshälfte 1, 2 abgestützt ist und mit einer Vorspannung beaufschlagt ist. Durch die Druckfeder 8 wird das Lamellenpaket 7a im Sinne einer Dehnung vorgespannt, so daß, solange die Druckkraft der Feder 8 nicht überschritten wird, eine Aufspreizung bzw. Wölbung der einzelnen Lamellen nicht eintritt.

Als Alternative zu der in Fig. 1d dargestellten Aufspreizsicherung zeigt Fig. 1e, daß das Lamellenpaket 7a mit einem Blechmantel 9 umgeben ist und der Hohlraum zwischen Blechmantel und Lamellenpaket mit einem gummiartigen Material 10 gefüllt ist. Auch hierdurch wird verhindert, daß sich bei Druckbelastung auf das Lamellenpaket 7a die einzelnen Lamellen aufspreizen. Durch die gummigefüllte Ummantelung bleiben die biegeelastischen Eigenschaften der Lamellen erhalten.

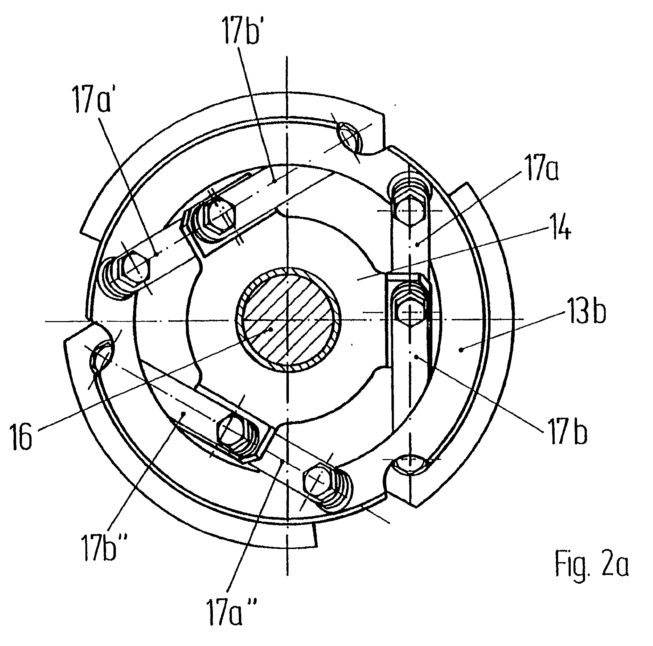

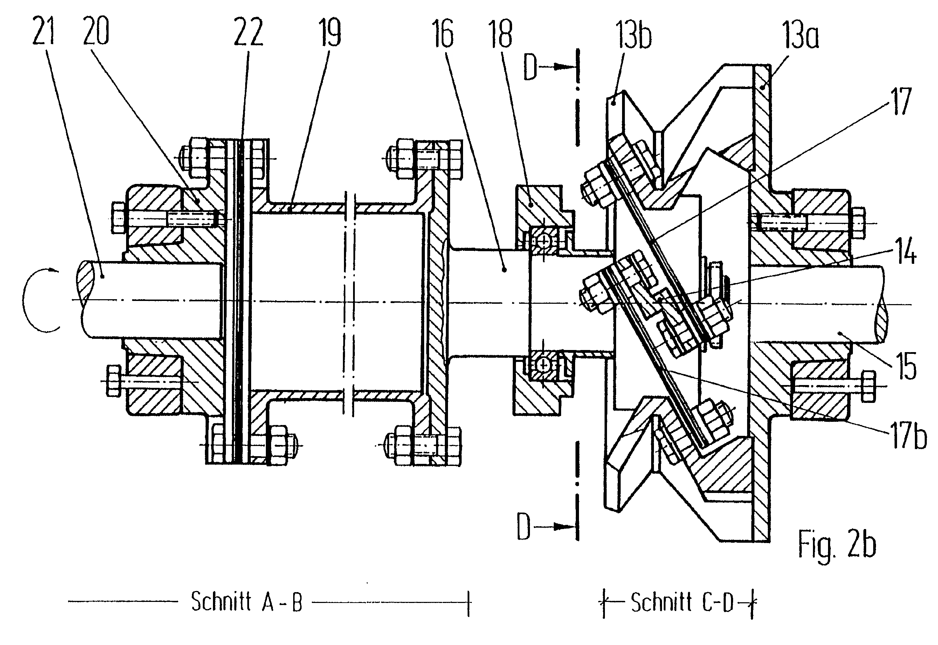

Das zweite Ausführungsbeispiel der Erfindung, welches in Fig. 2a, 2b dargestellt ist, zeigt eine Reihenschaltung aus einer Kupplungsanordnung, bei der Kupplungshälften 13 bzw. 14 über gegenüber der Achsnormalebene geneigte Teillamellenpakete 17, 17a, 17b und bei dem weitere Kupplungshälften 19, 20 über einen geschlossenen Lamellenpaketkranz 22 verbunden sind, der in Umfangsrichtung wechselweise an die Flansche der weiteren Kupplungshälften 19, 20 angeschlossen ist. Die weitere Kupplungshälfte 20 ist mit einer anzutreibenden Welle 21 verbunden. Der Teil der Kupplung mit den geneigten Teillamellenpaketen 17a, 17b ist über eine Nabe 13a mit der Antriebswelle 15 verbunden, wobei die Nabe 13a mit einem Außenring 13b einstückig verbunden ist. Jeweils ein Ende der Teillamellenpakete 17a, 17b ist mit dem Außenring 13b und das jeweils andere Ende gemeinsam an einem Punkt mit der Kupplungshälfte 14 verbunden. Über den Umfang verteilt sind 3 Teillamellenpakete 17a, 17b, 17a', 17b' und 17a'', 17b'' angeordnet.

Die Kupplungshälfte 14 ist mit einer Welle 16 über eine Verstelleinrichtung 18 verbunden, die als axialverschiebliches Lager ausgeführt ist. Die Welle 16 ist wiederum über eine Flanschverbindung mit der weiteren Kupplungshälfte 19 verbunden.

Die Funktion der beschriebenen Kupplungsanordnung ist folgende :

Wird auf die Verstelleinrichtung 18 von außerhalb so eingewirkt, daß sich der axiale Abstand zwischen den Wellen 16 bzw. 15 verändert, wird diese Axialbewegung in eine Winkelbewegung umgesetzt, die eine Verdrehung der Kupplungshälften 14, 13b zueinander bewirkt. Diese Winkelbewegung ergibt sich einerseits durch die außermittige Anordnung der Teillamellenpakete 17a 17b und andererseits durch deren Schrägstellung gegenüber der Achsnormalebene der Kupplung. Bei dem hier dargestellten Neigungswinkel der Teillamellenpakete 17a, 17b von ca. 45° erfolgt eine optimale Umsetzung von Axialbewegung der Verstelleinrichtung 18 in die Winkelbewegung. Ausgeglichen wird die Axialbewegung der Verstelleinrichtung 18 durch das Axialspiel, welches die Kupplungsverbindung 19, 20, 22 aufnehmen kann, da der geschlossene Lamellenpaketkranz 22 axial nachgiebig ist. Hierdurch läßt sich der Abstand zwischen den Wellen 15 und 21 auch bei korrigiertem Drehwinkel konstant halten.

Durch die geteilte Ausführung des Lamellenpaketes 17a, 17b wird erreicht, daß beispielsweise bei Axialbewegung der Kupplungshälfte 14 auf die Kupplungshälfte 13 zu auf das eine Lamellenpaket 17a, 17a', 17a'' (Fig. 2a) eine Zugkraft und auf das andere Teillamellenpaket 17b, 17b', 17b'' (Fig. 2a) eine Druckkraft wirkt. Dies gilt in umgekehrter Weise bei einer Bewegung der Kupplungshälfte 14 von der Kupplungshälfte 13 weg. Wie in Fig. 2a gezeigt ist, sind jeweils auf dem Umfang verteilt drei Teillamellenpaketpaare vorgesehen, jedoch ist es auch möglich nur zwei oder mehr als drei solcher Teillamellenpaketpaare vorzusehen.

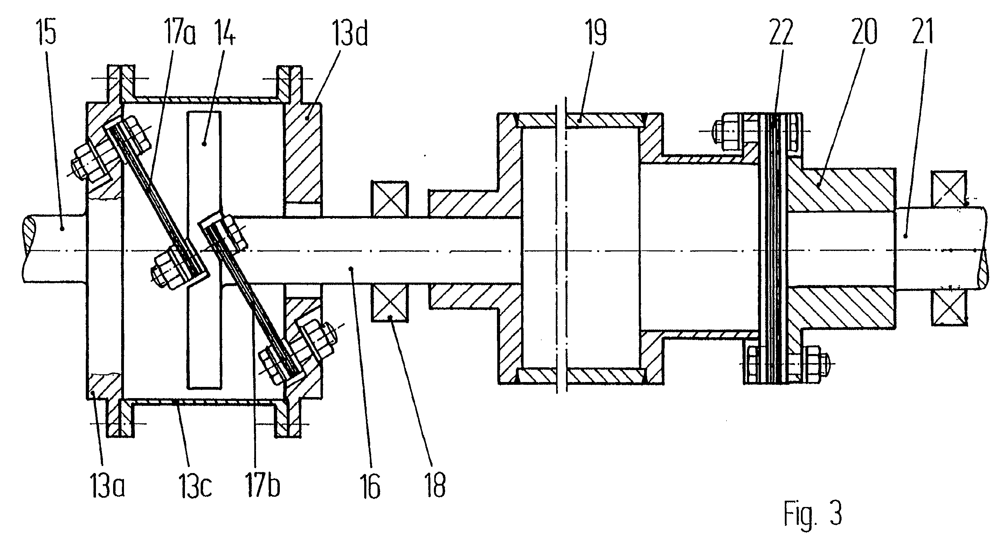

Das in Fig. 3 dargestellte dritte Ausführungsbeispiel der Erfindung unterscheidet sich vom zweiten Ausführungsbeispiel nur dadurch, daß die Ausführung der einen Kupplungshälfte 13 des Kupplungsteils mit den geneigten Lamellenpaketen 17a, 17b so ausgeführt ist, daß ein verdrehfestes Zwischenrohr 13c vorgesehen ist. Durch dieses Zwischenrohr 13c wird die mit der Antriebswelle 15 verbundene Nabe 13a mit einer der Welle 16 zugeordneten Nabe 13d drehstarr verbunden. Hierdurch bilden die Bauteile 13a, 13d, 13c eine kompakte Einheit, an der jeweils ein Ende der Teillamellenpakete 17a, 17b an unterschiedlichen Punkten angeschlossen ist. Die Punkte sind so gewählt, daß die Teillamellenpakete 17a, 17b die gleiche Neigung haben und mit ihren jeweils anderen Enden an einem gemeinsamen Punkt an der anderen Kupplungshälfte 14 angeschlagen sind. Die andere Kupplungshälfte 14 ist wiederum mit der Welle 16 verbunden, die über das Lager 18 mit einer nicht dargestellten Verstelleinrichtung axial verschiebbar ist.

Die Wirkungsweise entspricht der des zweiten Ausführungsbeispiels, wobei die Anordnung gegenüber Fig. 2b zwar spiegelverkehrt dargestellt ist, sich aber die Bezugszeichen ansonsten entsprechen.

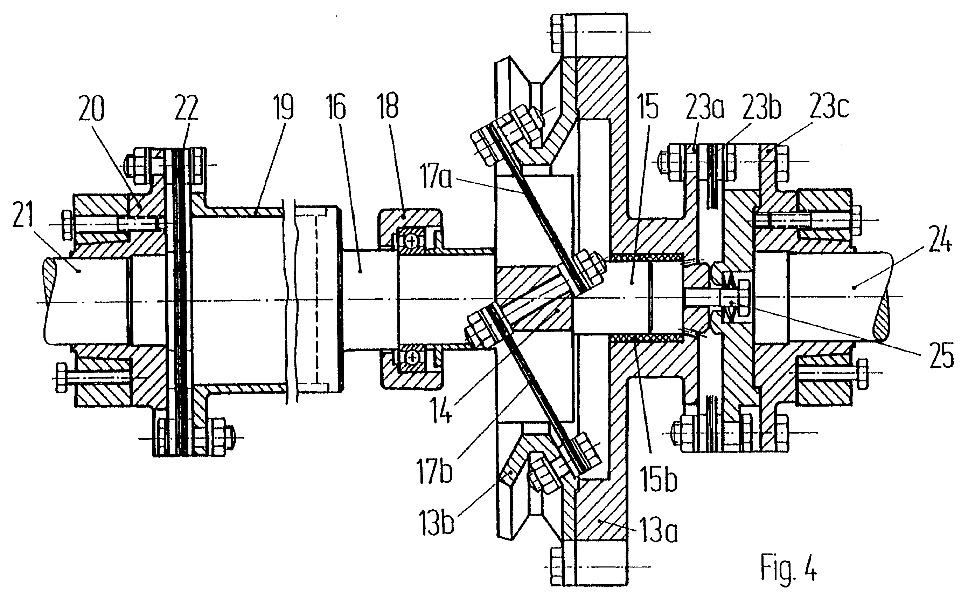

Das in Fig. 4 dargestellte vierte Ausführungsbeispiel der Erfindung unterscheidet sich vom in Fig. 2b dargestellten Ausführungsbeispiel dadurch, daß der Welle 15, die an der Nabe 13a angeschlossen ist, noch eine weitere Kupplung 23a, 23b, 23c nachgeschaltet ist. Diese Kupplung besteht aus Kupplungshälften 23a, 23c und einem sie verbindenden Lamellenpaketkranz 23b, der ebenso geschlossen ist wie der Lamellenpaketkranz 22 der weiteren Kupplungsanordnung 19, 20, 22. Die Verbindung der Welle 15 mit der zusätzlichen Kupplungsanordnung 23a, 23b, 23c erfolgt über ein Zwischenlager 15b. Parallel zum Lamellenpaketkranz 23b ist ein Koppelstück 25 vorgesehen, durch das die Kupplungshälften 23a,23c hinsichtlich des axialen Abstandes festgelegt werden können.

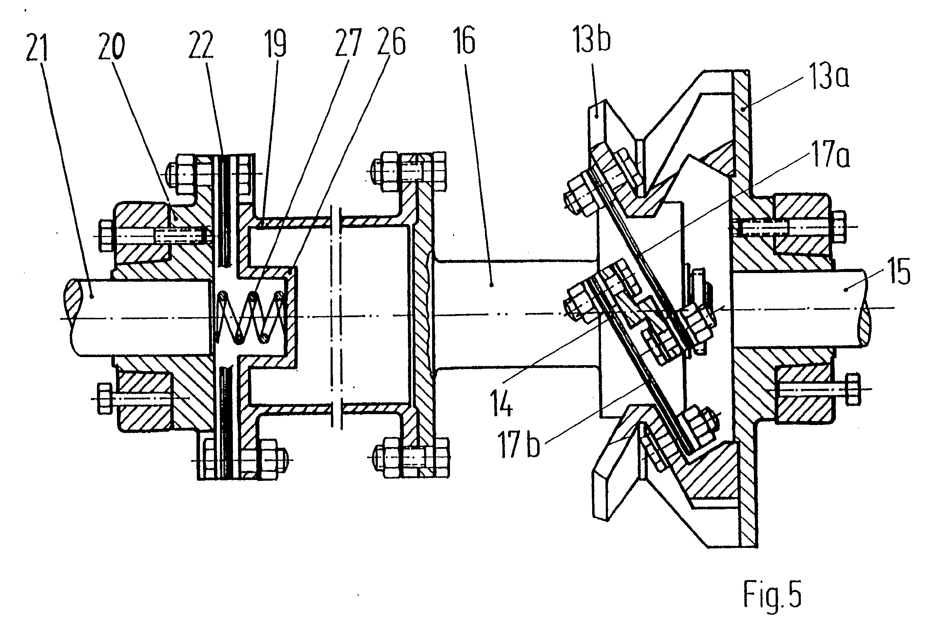

Das in Fig. 5 dargestellte fünfte Ausführungsbeispiel der Erfindung unterscheidet sich von dem in Fig. 2b dargestellten zweiten Ausführungsbeispiel nur dadurch, daß im Bereich der weiteren Kupplung 19, 20, 22 zwischen den durch den geschlossenen Lamellenpaketkranz 22 verbundenen Flanschen der Kupplungshälften 19, 20 ein zusätzliches Federelement 27 vorgesehen ist, dessen Vorspannung einstellbar ist. Abgestützt ist das Federelement 27 auf der einen Seite gegen die Rückseite der Welle 21 und auf der anderen Seite gegen eine Ausnehmung 26 im Flansch der weiteren Kupplungshälfte 19. Durch die Benennung der Vorspannkraft der Feder 27 läßt sich das Maß der Drehwinkelverstellung zwischen den Kupplungshälften 13 bzw. 14 an ein bestimmtes Drehmoment anpassen. Hierdurch werden Drehmomentspitzen abgedämpft.

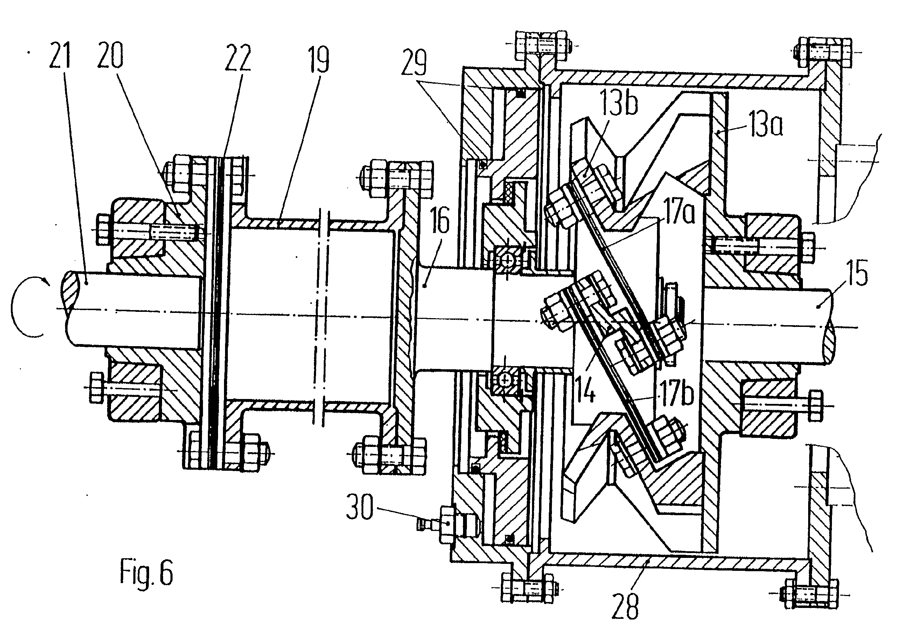

In Fig. 6 ist ein sechstes Ausführungsbeispiel der Erfindung dargestellt, welches ergänzend zum zweiten Ausführungsbeispiel (Fig. 2b) ein geschlossenes Gehäuse 28 vorsieht, welches die Kupplungshälften 13, 14 der Ganzstahlkupplung mit den geneigten Lamellenpaketkränzen 17a, 17b umgibt. Zur Abdichtung gegen den Außendruck sind Dichtungsringe 29 vorgesehen. Über ein Ventil 30 läßt sich ein komprimierbares Medium, beispielsweise Druckluft, in das Innere des Gehäuses 28 einbringen, derart, daß durch eine Veränderung des Innendrucks innerhalb des Gehäuses 28 der axiale Abstand der Kupplungshälften 14, 13 zueinander variiert werden kann. Hierdurch läßt sich die Wirkung der Verstelleinrichtung 18 auf pneumatischem Wege erreichen.

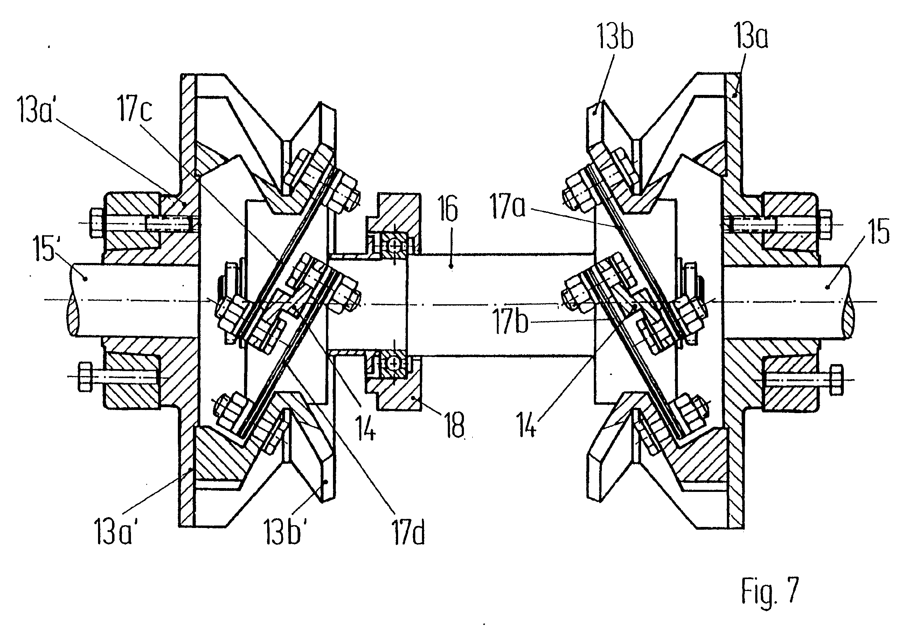

Das in Fig. 7 dargestellte siebte Ausführungsbeispiel der Erfindung besteht aus zwei gleichen Kupplungsteilen, die jeweils der rechten in Fig. 2b dargestellten Kupplung entsprechen. Die Kupplungsteile sind so zusammengeschaltet, daß die Teillamellenpakete 17a, 17b relativ zur Achsnormalebene den Teillamellenpaketen 17c, 17d gegensinnig geneigt gegenüberliegen. Zwischen den Kupplungsteilen befindet sich die bereits beschriebene Verstelleinrichtung 18. Bei einer Axialverstellung durch die Verstelleinrichtung 18 addiert sich bei gleichem Axialweg der Verstellwinkel zwischen den Kupplungshälften 13a und 13a' gegenüber dem Verstellwinkel nur einer solchen Kupplungsanordnung auf den doppelten Wert. Dieses Ausführungsbeispiel wird also dann gewählt werden, wenn bei einer nur geringen axialen Verstellung ein großer Drehversatz gewünscht ist.

## Patentansprüche

1. Ganzstahlkupplung mit mindestens einem die Kupplunghälften (1, 2, 13, 14) im unbelasteten Zustand axial auf Abstand haltenden außermittigen Federlamellenpaket (7, 17a, 17b, 17c, 17d), **dadurch gekennzeichnet,** daß das Federlamellenpaket (7, 17a, 17b, 17C, 17d) um einen spitzen Winkel gegenüber der Achsnormalebene geneigt ist und den Kupplungshälften eine Verstelleinrichtung (18) zugeordnet ist, mittels der die Kupplungshälften (13, 14) in ihrem axialen Abstand einstellbar sind.

2. Ganzstahlkupplung nach Anspruch 1, **dadurch gekennzeichnet,** daß der spitze Winkel 30°-60°, vorzugsweise 45°, beträgt.

3. Ganzstahlkupplung nach Anspruch 1 oder 2, **dadurch gekennzeichnet,** daß in Umfangsrichtung mehrere, gleichsinnig geneigte Lamellenpakete (7a, 7b, 7c, 7d, 17a, 17a', 17a", 17b, 17b', 17b") vorgesehen sind.

4. Ganzstahlkupplung nach einem der vorhergehenden Ansprüche, **dadurch gekennzeichnet,** daß Anfangs- und Endpunkt des Federlamellenpaketes (7, 17a-d,) mit jeweils einer Kupplungshälfte (1, 2, 13, 14) verbunden sind.

5. Ganzstahlkupplung nach einem der vorhergehenden Ansprüche, **dadurch gekennzeichnet,** daß das Federlamellenpaket (7, 17a-d) mit einer Aufspreizsicherung (8, 9, 10) versehen ist.

6. Ganzstahlkupplung nach Anspruch 5, **dadurch gekennzeichnet,** daß die Abspreizsicherung durch eine die das Federlamellenpaket (7, 17a-d) umgebende Ummantelung, insbesondere eine Blechummantelung (9), gebildet ist.

7. Ganzstahlkupplung nach Anspruch 6, **dadurch gekennzeichnet,** daß der die Lamellenpakete (7, 17a-d) umgebende durch die Ummantelung (9) begrenzte Raum mit einem Kunststoff, insbesondere Gummi (10), ausgefüllt ist.

8. Ganzstahlkupplung nach Anspruch 5, **dadurch gekennzeichnet,** daß die Aufspreizsicherung eine das Lamellenpaket (7, 17a-d) umgebende, gegen dessen Anfangs- und Endpunkt vorspannbar abgestützte Druckfeder (8) gebildet ist.

9. Ganzstahlkupplung nach einem der Ansprüche 1-3, **dadurch gekennzeichnet,** daß das Federlamellenpaket durch zwei Teillamellenpakete (17a-d) gebildet wird, deren jeweils eine Enden an einem gemeinsamen Punkt an der einen Kupplungshälfte (14) angeschlagen sind und deren jeweils andere Enden derart an unterschiedlichen Punkten an der anderen Kupplungshälfte (13) befestigt sind, daß die Teillamellenpakete gleichsinnig geneigt sind.

10. Ganzstahlkupplung nach einem der vorhergehenden Ansprüche, **dadurch gekennzeichnet,** daß den Kupplungshälften (13, 14) weitere, im unbelasteten Zustand durch weitere Federlamellenpakete (17c, 17d, 22) axial zueinander auf Abstand gehaltene, Kupplungshälften (13a', 13b', 19, 20) in Reihenschaltung zugeordnet sind.

11. Ganzstahlkupplung nach Anspruch 10, **dadurch gekennzeichnet,** daß das weitere Kupplungshälftenpaar (19, 20) durch eine an sich bekannte Lamellenkupplung, bestehend aus einem geschlossenen Lamellenpaketkranz (22), der in Umfangsrichtung wechselweise an die Flansche der weiteren Kupplungshälften (19, 20) angeschlossen ist, gebildet ist.

12. Ganzstahlkupplung nach Anspruch 11, **dadurch gekennzeichnet,** daß die durch einen zweiten geschlossenen Lamellenpaketkranz (23b) verbundenen Flansche noch eines weiteren Kupplungs hälften paars (23a, 23c) zusätzlich über ein den axialen Abstand zwischen diesen Flanschen festlegendes Koppelstück (25) verbunden sind.

13. Ganzstahlkupplung nach Anspruch 11, **dadurch gekennzeichnet,** daß die durch den geschlossenen Lamellenpaketkranz (22) verbundenen Flansche über ein zusätzliches Federelement (26, 27) mit einstellbarer Vorspannung axial koppelbar sind.

14. Ganzstahlkupplung nach Anspruch 10, **dadurch gekennzeichnet,** daß das weitere Kupplungshälftenpaar (19, 20) gegenüber den Teillamellenpaketen (17a, 17b) der Kupplungshälften (13, 14) in der Achsnormalhälfte entgegengesetzt geneigte weitere Teillamellenpakete (17c, 17d) aufweist.

15. Ganzstahlkupplung nach einem der vorhergehenden Ansprüche, **dadurch gekennzeichnet,** daß die Kupplungshälften (13, 14) von einem druckdichten Gehäuse (28) umgeben sind, welches ein Einlaßventil (30) enthält derart, daß bei einer Beaufschlagung des Innenraumes des Gehäuses (28) über das Einlaßventil (30) mit einem Druckmedium, insbesondere Druckluft, die Kupplungshälften (13, 14) axial gegeneinander verstellbar sind.

## Claims

1. An all-steel clutch having at least one eccentric pack of spring plates (7, 17a, 17b, 17c, 17d) which holds the clutch halves (1, 2, 13, 14) axially at a distance in the unloaded condition, characterized in that the pack of spring plates (7, 17a, 17b, 17c, 17d) is inclined by an acute angle in relation to the axial normal plane, and associated with the coupling halves is an adjusting device (18) by means of which the axial distance between the clutch halves (13, 14) can be adjusted.

2. An all-steel clutch according to claim 1, characterized in that the acute angle is 30°-60°, preferably 45°.

3. An all-steel clutch according to claims 1 or 2, characterized in that a number of packs of spring plates (7a, 7b, 7c, 7d, 17a, 17a', 17a'', 17b, 17b', 17b'') inclined to the same hand are provided in the peripheral direction.

4. An all-steel clutch according to any of the preceding claims, characterized in that the starting and terminating point of the pack of the spring plates (7, 17a-d) are each connected to one clutch half (1, 2, 13, 14).

5. An all-steel clutch according to any of the preceding claims, characterized in that the pack of spring plates (7, 17a-d) has an anti-expansion device (8, 9, 10).

6. An all-steel clutch according to claim 5, characterized in that the anti-expansion device is formed by a jacketing, more particulary a sheet metal jacketing (9), enclosing the pack of spring plates (7, 17a-d).

7. An all-steel clutch according to claim 6, characterized in that the space enclosing the packs of spring plates (7, 17a-d) and bounded by the jacketing (9) is filled with a plastics, more particularly rubber (10).

8. An all-steel clutch according to claim 5, characterized in that the anti-expansion device is formed by a compression spring (8) which encloses the pack of spring plates (7, 17a-d) and bears prestressably against its starting and terminating point.

9. An all-steel clutch according to any of claims 1-3, characterized in that the pack of spring plates is formed by two component packs of spring plates (17a-d), one end of each of which is attached to a common point on one clutch half (14), its other end being so attached at different points on the other clutch half (13) that the component packs of spring plates are inclined to the same hand.

10. An all-steel clutch according to any of the preceding claims, characterized in that the associated with the clutch halves (13, 14) are further, serially connected clutch halves (13a', 13b', 19, 20) axially held at a distance from one another in the unloaded condition by further packs of spring plates (17c, 17d, 22).

11. An all-steel clutch according to claim 10, characterized in that the further pair of clutch halves (19, 20) is formed by a known disc clutch consisting of a closed annular disc pack (22) connected in the peripheral direction alternately to the flanges of the further clutch halves (19, 20).

EP 0 359 917 B1

12. An all-steel clutch according to claim 11, characterized in that the flanges, connected by a second closed annular disc pack (23b), of yet another pair of clutch halves (23a, 23c) are additionally connected via a coupling member (25) determining the axial distance between such flanges.

13. An all-steel clutch according to claim 11, characterized in that the flanges connected by the closed annular disc pack (22) can be axially coupled with adjustable prestressing via an additional spring element (26, 27).

14. An all-steel clutch according to claim 10, characterized in that the further pair of clutch halves (19, 20) has further component packs of spring plates (17c, 17d) oppositely inclined in the axial normal half in relation to the component packs of spring plates (17a, 17b) of the clutch halves (13, 14).

15. An all-steel clutch according to any of the preceding claims, characterized in that the clutch halves (13, 14) are enclosed by a pressure-tight casing (28) which so comprises an inlet valve (30) that when the interior of the casing (28) experiences a pressure medium, more particularly compressed air, via the inlet valve (30), the clutch halves (13, 14) can be adjusted axially in relation to one another.


## Revendications

1. L'invention concerne un accouplement tout-acier avec au moins un bloc-ressort à lames (7, 17a, 17b, 17c, 17d) excentré maintenant, axialement à écartement, à l'état non chargé, les moitiés d'accouplement (1, 2, 13, 14), caractérisé en ce que le bloc-ressort à lames (7, 17a, 17b, 17c, 17d) est incliné d'un angle aigu par rapport au plan normal à l'axe et un dispositif d'ajustage (18) est adjoint aux moitiés d'accouplement, au moyen duquel les moitiés d'accouplement (13, 14) sont réglables pour leur écartement axial l'une de l'autre.

2. Accouplement tout-acier selon la revendication 1, caractérisé en ce que l'angle aigu vaut 30°-60°, de préférence 45°.

3. Accouplement tout-acier selon la revendication 1 ou 2, caractérisé en ce que plusieurs blocs-lames (7a, 7b, 7c, 7d, 17a, 17a', 17a″, 17b, 17b', 17b″) sont disposés inclinés dans le même sens en direction périphérique.

4. Accouplement tout-acier selon l'une des revendications précédentes, caractérisé en ce que les points de début et de fin du bloc-ressort à lames (7, 17a-d) sont reliés respectivement à une moitié d'accouplement(1, 2, 13, 14).

5. Accouplement tout-acier selon l'une des revendications précédentes, caractérisé en ce que le bloc-ressort à lames (7, 17a-d) est muni d'une sécurité d'écartement (8, 9, 10).

6. Accouplement tout-acier selon la revendication 5, caractérisé en ce que la sécurité d'écartement est formée par une enveloppe entourant le bloc-ressort à lames (7, 17a-d) de préférence une enveloppe en tôle (9).

7. Accouplement tout-acier selon la revendication 6, caractérisé en ce que l'espace intermédiaire entourant les blocs-lames (7, 17a-d) et limité par l'enveloppe (9) est rempli par une matière synthétique, en particulier du caoutchouc (10).

8. Accouplement tout-acier selon la revendication 5, caractérisé en ce que la sécurité d'écartement est formée par un ressort de compression (8) entourant le bloc-lames (7, 17e-d) appuyé contre ses points de début et de fin en pouvant être précontraint.

9. Accouplement tout-acier selon l'une des revendications 1-3, caractérisé en ce que le bloc-ressort à lames est formé par deux blocs-ressorts à lames (17a-d) partiels inclinés dans le même sens, dont chaque fois des premières extrémités sont accrochées à un point commun sur l'une des moitiés d'accouplement (14) et dont les autres extrémités sont chaque fois fixées à des points différents sur l'autre moitié d'accouplement (13), et que les blocs-lames partiels sont inclinés dans le même sens.

10. Accouplement tout-acier selon l'un des revendications précédentes, caractérisé en ce que d'autres moitiés d'accouplement (13a', 13b', 19, 20) maintenues à écartement axial à l'état non chargé par d'autres blocs-ressorts à lames (17c, 17d, 22) sont adjointes aux autres moitiés d'accouplement (13, 14) en montage série.

11. Accouplement tout-acier selon la revendication 10, caractérisé en ce que l'autre paire de moitiés d'accouplement (19, 20) est formée par un accouplement à lames connu en soi constitué par une couronne de bloc-lames fermée (22) qui est raccordée alternativement en direction périphérique aux flasques des autres moitiés d'accouplement (19, 20).

12. Accouplement tout-acier selon la revendication 11, caractérisé en ce que les flasques reliées par une seconde couronne de blocs-lames (23b) sont encore reliées additionnellement à une autre paire de moitiés d'accouplements (23a, 23c) par l'intermédiaire d'une pièce de couplage (25) fixant l'écartement axial entre ces flasques.

13. Accouplement tout-acier selon la revendication caractérisé en ce que les flasques reliées par la couronne de bloc-lames fermée (22) peuvent être accouplées axialement par un ressort (26, 27) supplémentaire à précontrainte réglable.

7

14. Accouplement tout-acier selon la revendication 10, caractérisé en ce que l'autre paire de moitiés d'accouplement (19, 20) présente d'autres blocs-lames partiels (17c, 17d) inclinés en sens inverse dans le plan normal à l'axe par rapport aux blocs-lames partiels (17a, 17b).

15. Accouplement tout-acier selon l'une des revendications précédentes, caractérisé en ce que les moitiés d'accouplement (13, 14) sont entourées par un carter (28) étanche en pression.

Fig.1a

Fig.1b

Fig. 1c

Fig. 1d

Schnitt: c–c

Fig. 1e

Fig. 1f

Fig. 2a

Fig. 2b

Schnitt C-D

Schnitt A - B

15  17a  14  13d  19  22  20  21

13a  13c  17b  16  18

Fig. 3

EP 0 359 917 B1

Fig. 4

EP 0 359 917 B1

Fig.5

EP 0 359 917 B1

Fig. 6

EP 0 359 917 B1

Fig. 7

EP 0 359 917 B1